# EUROPEAN PATENT SPECIFICATION

(11) **EP 1 867 747 B1**
(45) Date of publication and mention of the grant of the patent: **14.11.2012**
(21) Application number: 06731354.4
(22) Date of filing: 31.03.2006
(51) Int. Cl.: C22C 38/00, C21D 9/46, C23C 2/28

(54) **ALLOYED HOT-DIP GALVANIZED STEEL SHEET AND METHOD FOR PRODUCING SAME**
LEGIERTES FEUERVERZINKTES STAHLBLECH UND HERSTELLUNGSVERFAHREN DAFÜR
FEUILLE D ACIER ALLIE GALVANISE PAR IMMERSION A CHAUD ET PROCEDE POUR SA FABRICATION

(30) Priority: 31.03.2005 JP 2005103832; 03.03.2006 JP 2006058458
(43) Date of publication of application: 19.12.2007
(73) Proprietor: JFE Steel Corporation, Tokyo (JP)
(72) Inventor: NAKAGAITO, Tatsuya, c/o JFE STEEL CORPORATION, Chiyoda-ku, Tokyo 100-0011 (JP); FUTATSUKA, Takayuki, c/o JFE STEEL CORPORATION, Chiyoda-ku, Tokyo 100-0011 (JP); MATSUDA, Hiroshi, c/o JFE STEEL CORPORATION, Chiyoda-ku, Tokyo 100-0011 (JP); AWAJIYA, Yutaka c/o JFE STEEL CORPORATION, Chiyoda-ku, Tokyo 100-0011 (JP); NAGATAKI, Yasunubu, c/o JFE STEEL CORPORATION, Chiyoda-ku, Tokyo 100-0011 (JP)
(74) Representative: HOFFMANN EITLE
(86) International application number: PCT/JP2006/307406
(87) International publication number: WO 2006/104282

(56) References cited:
- EP-A- 1 160 346
- EP-A- 1 696 048
- JP-A- 11 222 644
- JP-A- 2000 345 288
- JP-A- 2002 038 248
- JP-A- 2002 038 248
- JP-A- 2002 047 535
- JP-A- 2003 105 491
- JP-A- 2004 115 843
- JP-A- 2004 115 843

## Description

### Technical Field

The present invention relates to a low-yield-ratio, high-strength galvannealed steel sheet used in application as an automobile steel sheet and a method for producing the same.

### Background Art

In recent years, from the viewpoint of conservation of the global environment, improvement in mileage of automobiles has become an important problem. Therefore, attempts have been made actively to increase the strength of car body materials to thin the materials and decrease the weights of car bodies. However, increases in strength of steel sheets decease ductility, i.e., decrease workability, and thus there have been desired materials having both high strength and high workability.

For such a requirement, there have been developed various composite structure steels such as ferrite-martensite dual phase steel (Dual-Phase steel) and TRIP steel (transformation induced plasticity steel) using transformation-induced plasticity of residual austenite.

In some cases, the surfaces of these steel sheets are galvanized for improving rust proofness in practical use. As such galvanized steel sheets, galvannealed steel sheets subjected to heat treatment for diffusing Fe of the steel sheets into plating layers after hot-dip galvanization are widely used from the viewpoint of securing press property, spot weldability, coating adhesion. With respect to the galvannealed steel sheets, various proposals have been made.

For example, in Japanese Unexamined Patent Application Publication No. 11-279691, there has been proposed a galvannealed steel sheet with excellent workability in which residual y is secured by adding a large amount of Si to the steel sheet, thereby achieving high ductility. However, Si decreases the plating properties, and thus a complicated process of Ni pre-plating, applying a special chemical, reducing an oxide layer on the surface of a steel sheet, and/or appropriately controlling the thickness of an oxide layer is required for adhesion of a zinc plating to such high-Si steel.

In Japanese Unexamined Patent Application Publication No. 2002-030403, there has been proposed a galvannealed steel sheet with excellent ductility in which instead of Si, Al with a small adverse effect on the plating properties is added to the steel sheet, thereby improving wettability and anti-powdering property. In actual press forming, improvement in ductility as well as improvement in shape fixability has become a large problem.

When the strength of a steel sheet is increased, yield strength is also increased, and the amount of spring back in press forming is increased to decrease the shape fixability. Such a decrease in shape fixability can be improved by decreasing yield ratio. In Japanese Unexamined Patent Application Publication No. 2002-317249, a low-yield-ratio cold-rolled steel sheet has been proposed. However, when this steel sheet is applied to an alloyed hot-dip steel sheet, it is difficult to achieve a low yield ratio because of the zinc bath temperature of as high as over 450°C and the need for alloying at over 500°C.

Further, in Japanese Unexamined Patent Application Publication No. 2004-115843, there has been proposed a hot-dip galvanized steel sheet in which the amounts of Si, Al, and Mn are balanced, and the steel sheet is maintained at a low temperature for a short time after annealing to form a martensite phase containing a large amount of C, thereby achieving a low yield ratio. However, the proposed technique relates to DP steel which cannot utilize improvement in ductility (TRIP effect) due to strain-induced transformation of residual austenite. Therefore, the steel sheet cannot be recognized as having sufficient ductility.

### Disclosure of Invention

The present invention provides a high-strength galvannealed steel sheet capable of achieving good alloying hot-dip galvanization properties without through a complicated process and achieving excellent ductility and a low yield ratio after alloying hot-dip galvanization, and a method of producing the steel sheet. In the present invention, "high strength" means a TS of 340 MPa or more.

In order to obtain a low-yield-ratio high-strength galvannealed steel sheet having excellent ductility, the inventors repeated intensive research from the viewpoint of the composition and microstructure of the steel sheet. As a result, it was found that the yield ratio of the galvannealed steel sheet can be significantly decreased by adding Cr, V, and Mo in combination with Al, thereby achieving a yield ratio of 55% or less. In addition, when the amounts of C, Si, Mn, and Al are appropriately controlled, the amount of residual austenite can be increased without decreasing the alloying hot-dip galvanization properties, achieving excellent ductility.

Although the reason why the yield ratio can be decreased by adding Cr, V, and Mo in combination with Al is not necessarily known, a conceivable reason is as follows: Al discharges C dissolved in ferrite into a second phase and effectively functions to purify ferrite, thereby decreasing the yield ratio. On the other hand, the addition of Cr, V, and Mo permits residual austenite to be formed by austempering at a high temperature with a short time. Therefore, the formed residual austenite has a small amount of dissolved C and is transformed to martensite with small strain, forming a strain field around it and decreasing yield stress. It is thought that the yield stress is more effectively decreased due to the formation of a strain field around ferrite which is purified by adding Al to decrease the amount of dissolved C.

The present invention has been completed on the basis of the above-mentioned finding and provides the following items (1) to (18):
(1) A galvannealed steel sheet including, by % by mass, 0.05 to 0.25% of C, 2.0% or less of Si, 1 to 3% of Mn, 0.1% or less of P, 0.01% or less of S, 0.3 to 2% of Al, less than 0.005% of N, 1% or less of Cr, 1% or less of V, 1% or less of Mo, less than 0.005% of Ti, and less than 0.005% of Nb, and satisfying the relations, Si + Al ≥ 0.6% and Cr + V + Mo = 0.1 to 2%, the balance being Fe and inevitable impurities.
(2) A galvannealed steel sheet containing, by % by mass, 0.05 to 0.25% of C, 2.0% or less of Si, 1 to 3% of Mn, 0.1% or less of P, 0.01% or less of S, 0.3 to 2% of Al, less than 0.005% of N, 1% or less of Cr, 1% or less of V, 1% or less of Mo, less than 0.005% of Ti, and less than 0.005% of Nb, and satisfying the relations, Si + Al ≥ 0.6%, N ≤ 0.007% - (0.003 x Al)%, and Cr + V + Mo = 0.1 to 2%, the balance being Fe and inevitable impurities.
(3) The galvannealed steel sheet described in (1), further containing, by % by mass, at least one of 0,005% or less of B and 1% or less of Ni.
(4) The galvannealed steel sheet described in (2), further containing, by % by mass, at least one of 0.005% or less of B and 1% or less of Ni.
(5) The galvannealed steel sheet described in (1), further containing, by % by mass, at least one of Ca and REM in a total of 0.01% or less.
(6) The galvannealed steel sheet described in (2), further containing, by % by mass, at least one of Ca and REM in a total of 0.01% or less.
(7) The galvannealed steel sheet described in (3), further containing, by % by mass, at least one of Ca and REM in a total of 0.01% or less.
(8) The galvannealed steel sheet described in (4), further containing, by % by mass, at least one of Ca and REM in a total of 0.01% or less.
(9) The galvannealed steel sheet described in.any one of (1) to (8), having a metal structure containing a residual austenite phase at a volume ratio of 3 to 20%.
(10) A method for producing a galvannealed steel sheet, comprising the steps of:
   annealing, in the temperature range of 730°C to 900°C, a cold-rolled steel sheet containing, by % by mass, 0.05 to 0.25% of C, 2% or less of Si, 1 to 3% of Mn, 0.1% or less of P, 0.01% or less of S, 0.3 to 2% of Al, less than 0.005% of N, 1% or less of Cr, 1% or less of V, 1% or less of Mo, less than 0.005% of Ti, and less than 0.005% of Nb, and satisfying the relations, Si + Al ≥ 0.6% and Cr + V + Mo = 0.1 to 2%, the balance being Fe and inevitable impurities;
   cooling the annealed cold-rolled steel sheet at a cooling rate of 3 to 100 °C/second;
   retaining the cooled cold-rolled steel sheet in the temperature range of 350°C to 600°C for 90 to 250 seconds;
   hot-dip galvanizing the cold-rolled steel sheet after the retention; and
   alloying the hot-dip galvanized cold-rolled steel sheet at a temperature of 470°C to 600°C.
(11) A method for producing a galvannealed steel sheet, comprising the steps of:
   annealing, in the temperature range of 730°C to 900°C, a cold-rolled steel sheet containing, by % by mass, 0.05 to 0.25% of C, 2% or less of Si, 1 to 3% of Mn, 0.1% or less of P, 0.01% or less of S, 0.3 to 2% of Al, less than 0.005% of N, 1% or less of Cr, 1% or less of V, 1% or less of Mo, less than 0.005% of Ti, and less than 0.005% of Nb, and satisfying the relations, Si + Al ≥ 0.6%, N ≤ 0.007% - (0.003 x Al)%, and Cr + V + Mo = 0.1 to 2%, the balance including Fe and inevitable impurities;
   cooling the annealed cold-rolled steel sheet at a cooling rate of 3 to 100 °C/second;
   retaining the cooled cold-rolled steel sheet in the temperature range of 350°C to 600°C for 90 to 250 seconds;
   hot-dip galvanizing the cold-rolled steel sheet after the retention; and
   alloying the hot-dip galvanized cold-rolled steel sheet at a temperature of 470°C to 600°C.
(12) The method for producing the galvannealed steel sheet described in (10), wherein the cold-rolled steel sheet further contains, by % by mass, at least one of 0.005% or less of B and 1% or less of Ni.
(13) The method for producing the galvannealed steel sheet described in (11), wherein the cold-rolled steel sheet further contains, by % by mass, at least one of 0.005% or less of B and 1% or less of Ni.
(14) The method for producing the galvannealed steel sheet described in (10), wherein the cold-rolled steel sheet further contains, by % by mass, at least one of Ca and REM in a total of 0.01% or less.
(15) The method for producing the galvannealed steel sheet described in (11), wherein the cold-rolled steel sheet further contains, by % by mass, at least one of Ca and REM in a total of 0.01% or less.
(16) The method for producing the galvannealed steel sheet described in (12), wherein the cold-rolled steel sheet further contains, by % by mass, at least one of Ca and REM in a total of 0.01% or less.
(17) The method for producing the galvannealed steel sheet described in (13), wherein the cold-rolled steel sheet further contains, by % by mass, at least one of Ca and REM in a total of 0.01% or less.
(18) The method for producing the galvannealed steel sheet described in any one of (10) to (17), wherein the galvannealed steel sheet contains a residual austenite phase at a volume ratio of 3 to 20%.

According to the present invention, sufficient alloying hot-dip galvanization properties can be obtained without passing through a complicated process, and excellent ductility and a low yield ratio of 55% or less can be achieved after alloying hot-dip galvanization.

### Embodiments for Carrying Out the Invention

The present invention will be described in detail below.

First, the reasons for limiting the composition of the galvannealed steel sheet of the present invention will be described. Hereinafter, "%" represents "% by mass".

### C: 0.05 to 0.25%

C is an element for stabilizing austenite and a necessary element for securing residual austenite. When the C amount is less than 0.05%, it is difficult to simultaneously secure the strength of the steel sheet and the amount of residual austenite to achieve high ductility. On the other hand, when the C amount exceeds 0.25%, a welded portion and a heat-affected portion are significantly hardened, thereby impairing weldability. Therefore, the C amount is in the range of 0.05 to 0.25%.

### Si: 2.0% or less

Si is an element effective in strengthening steel. Si is also a ferrite forming element which promotes the concentration of C in austenite and suppresses the formation of a carbide and thus has the function to promote the formation of residual austenite. The Si amount is preferably 0.01% or more. However, when the Si amount exceeds 2.0%, plating properties are degraded. Therefore, the Si amount is 2.0% or less and preferably 0.5% or less.

### Mn: 1 to 3%

Mn is an element effective in strengthening steel. Mn is also an element for stabilizing austenite and an element necessary for increasing residual austenite. However, when the Mn amount is less than 1%, these effects cannot be easily obtained. On the other hand, when the Mn amount exceeds 3%, a second phase fraction is excessively increased, and the amount of solid-solution strengthening is increased, thereby significantly increasing strength and decreasing ductility. Therefore, the Mn amount is in the range of 1 to 3%.

### P: 0.1% or less

P is an element effective in strengthening steel. However, when the P amount exceeds 0.1%, embrittlement is caused by grain boundary segregation to impair impact properties. Therefore, the P amount is 0.1% or less.

### S: 0.01% or less

S forms an inclusion such as MnS and causes deterioration in impact resistance and cracking along a metal flow of a welded portion. Therefore, the S amount is preferably as small as possible. However, from the viewpoint of production cost, the S amount is 0.01% or less.

### Al: 0.3 to 2%

Al effectively functions to purify ferrite and decrease the yield ratio of steel. However, when the Al amount is less than 0.3%, the effect is insufficient. On the other hand, when the Al amount exceeds 2%, the amount of the inclusion in a steel sheet is increased to degrade ductility. Therefore, the Al amount is in the range of 0.3% to 2%.

### Si + Al ≥ 0.6%

Like Si, Al is a ferrite forming element which promotes the concentration of C in austenite and suppresses the formation of a carbide and thus has the function to promote the formation of residual austenite. When a total of Al and Si added is less than 0.6%, the effect is insufficient, and sufficient ductility cannot be obtained. Therefore, the total of Si + Al is 0.6% or more and preferably 3% or less.

### N: less than 0.005%

N is an inevitable impurity and forms a nitride. When the N amount is 0.005% or more, ductility at high and low temperatures is decreased by the formation of a nitride. Therefore, the N amount is less than 0.005%.

### N ≤ 0.007% - (0.003 x Al)%

When the amount of AlN precipitate is increased with an increase in the N amount, cracking in a slab easily occurs in continuous casting. When it is necessary to avoid such cracking in a slab in continuous casting, in order to avoid this, the N amount is less than 0.005%, and the relational expression, N ≤ 0.007% - (0.003 x Al)%, is satisfied.

### Cr, V, Mo: each 1% or less

### Cr + V + Mo: 0.1 to 2%

Cr, V, and Mo are elements effective in decreasing the yield ratio of steel. The effect becomes significant when these elements are added in combination with Al. Even when each of these elements is added in an amount of over 1%, the effect is saturated. In addition, the effect is insufficient when the total of Cr, V, and Mo is less than 0.1%. Conversely, when the total exceeds 2%, strength may be excessively increased to decrease ductility and degrade the plating properties. Therefore, the amount of each of Cr, V, and Mo is 1% or less, and the total is 0.1 to 2% and preferably 0.15 to 1.3%.

### Ti, Nb: each less than 0.005%

Ti and Nb precipitate as carbonitrides to strengthen steel. However, such precipitation strengthening increases yield stress and is thus disadvantageous for decreasing the yield ratio. When the amount of each of the elements added is 0.005% or more, the yield stress is increased. Therefore, the amount of each of Ti and Nb is less than 0.005%.

### B: 0.005% or less

B is effective in strengthening steel and can thus be added according to demand. When the B amount exceeds 0.005%, strength is excessively increased to decrease workability. Therefore, when B is added, the amount is 0.005% or less.

### Ni: 1% or less

Ni is an austenite-stabilizing element which causes austenite to remain and is effective in increasing strength, and thus can be added according to demand. However, even when the amount of Ni exceeds 1%, the effect is saturated, and conversely the cost is increased. Therefore, when Ni is added, the amount is 1% or less.

### Ca and REM: at least one in total of 0.01% or less

Ca and REM have the function to control the form of a sulfide inclusion and thus have the effect of improving elongation and flange properties of a steel sheet, and thus can be added according to demand. When the total of these elements exceeds 0.01%, the effect is saturated. Therefore, when Ca and REM are added, the total of at least one of the elements is 0.01% or less.

Besides the above-described elements and Fe in the balance, various impurities in the production process and trace amounts of essential elements added in the production process are inevitably mixed. However, these inevitable impurities are permissible because they have no particular influence on the advantage of the present invention.

Next, the metal structure of the steel sheet will be described.

### Residual austenite phase: volume ratio of 3 to 20%

In the present invention, a residual austenite phase is essential for effectively utilizing strain-induced transformation and obtaining high ductility. Therefore, it is very important to control the volume ratio of the residual austenite. In the present invention, from the viewpoint of securing high ductility, the ratio of the residual austenite phase is preferably at least 3% or more. On the other hand, when the ratio of the residual austenite phase exceeds 20%, a large amount of martensite is formed after molding to increase brittleness. Since it may be necessary to suppress brittleness in a permissible range, therefore, the ratio of the residual austenite phase is preferably 20% or less. The metal structure of the steel sheet of the present invention includes a ferrite main phase and a second phase including a residual austenite phase. However, the volume ratio of the ferrite phase is preferably 40 to 90% from the viewpoint of securing high ductility. Examples of a metal structure other than the residual austenite phase in the second phase include a bainite phase, a martensite phase and a pearlite phase. The total volume ratio of these phases is preferably 7 to 50%.

Next, the conditions for producing the galvannealed steel sheet of the present invention will be described.

In the present invention, steel having the above-described composition is melted and continuously cast to form a cast slab, and then the slab is hot-rolled and cold-rolled. However, the conditions for these processes are not particularly limited. Then, in a continuous hot-dip plating line, the steel sheet is annealed in a temperature range of 730°C to 900°C, cooled at 3 to 100 °C/s, retained in a temperature range of 350°C to 600°C for 90 to 250 seconds, hot-dip galvanized, and then alloyed at 470°C to 600°C.

### Annealing temperature: 730 to 900°C

Annealing is performed in an austenite single-phase zone or a two-phase zone including an austenite phase and a ferrite phase. When the annealing temperature is lower than 730°C, in some cases, a carbide is not sufficiently dissolved in the steel sheet, or recrystallization of ferrite is not completed, thereby failing to obtain intended properties. On the other hand, when the annealing temperature exceeds 900°C, austenite grains are significantly grown, and the number of ferrite nucleation sites formed from the second phase by subsequent cooling may be decreased. Therefore, the annealing temperature is 730°C to 900°C.

### Cooling rate: 3 to 100°C/s

When the cooling rate is less than 3°C/s, a large amount of pearlite precipitates, the amount of C dissolved in untransformed austenite is significantly decreased, and thus the intended structure cannot be obtained. When the cooling rate exceeds 100 °C/s, growth of ferrite is suppressed to significantly decrease the volume ratio of ferrite, and thus sufficient ductility cannot be secured. Therefore, the cooling rate is preferably 3 to 100 °C/s.

### Retention temperature: 350°C to 600°C

When the retention temperature exceeds 600°C, a carbide precipitates from untransformed austenite. When the retention temperature is lower than 350°C, a carbide precipitates in bainitic ferrite due to lower bainite transformation, thereby failing to sufficiently obtain stable residual austenite. Therefore, the retention temperature is 350°C to 600°C. In order to stably produce residual austenite, the retention temperature is preferably 500°C or less.

### Retention time: more than 90 to 250 seconds

The retention time pays a very important role for controlling residual austenite. Namely, when the retention time is less than 90 seconds, stabilization of untransformed austenite does not proceed, and thus the amount of residual austenite cannot be secured, thereby failing to obtain desired properties. On the other hand, when the retention time exceeds 250 seconds, an austenite phase containing a small amount of dissolved C, which is the object of the present invention, cannot be obtained, and it becomes difficult to transform to a martensite phase with a small amount of strain and achieve low yield stress by a strain field formed around the martensite phase. Therefore, the retention time is more than 90 to 250 seconds. From the viewpoint of stabilization of untransformed austenite, the retention time exceeds 90 seconds. In order to decrease yield stress, the retention time is preferably 200 seconds or less.

### Alloying temperature: 470°C to 600°C

The alloying temperature after the retention and hot-dip galvanization must be higher than the plating bath temperature, and the lower limit is 470°C. When the alloying temperature exceeds 600°C, like in the case where the retention temperature exceeds 600°C, a carbide precipitates from untransformed austenite, and thus stable residual austenite cannot be obtained. Therefore, the alloying temperature is 470°C to 600°C.

In the production conditions of the present invention, the specified annealing temperature, retention temperature, and alloying temperature need not be constant as long as they are in the above respective ranges. In addition, the cooling rate may be changed during cooling as long as it is in the above range. Further, the plating conditions may be in a usual operation range, i.e., METSUKE may be 20 to 70 g/m², and the amount of Fe in a plating layer may be about 6 to 15%.

### EXAMPLE

An example of the present invention will be described.

Steel having each of the compositions shown in Table 1 was molten by a converter and continuously cast to form a cast slab. The occurrence of cracking in the slab is shown in Table 1. The occurrence of cracking was determined by visual observation as well as color check after the slab was cooled to room temperature.

The resulting slab was heated to 1250°C and then hot-rolled at a finish rolling temperature of 900°C to prepare a hot-rolled steel sheet having a thickness of 3.0 mm. After hot-rolling, the hot-rolled steel sheet was pickled and further cold-rolled to prepare a cold-rolled steel sheet having a thickness of 1.2 mm. Then, in a continuous hot-dip galvanization line, each cold-rolled steel sheet was heat-treated under the conditions shown in Table 2, plated at 50/50 g/m², and then alloyed so that the Fe amount in the plating layer was 9%.

Further, each of the resulting steel sheets was temper-rolled by 0.5% to examine mechanical properties. As the mechanical properties, yield stress YS, tensile strength TS, and elongation EL were measured using a JIS No. 5 tensile specimen obtained from each steel sheet in a direction perpendicular to the rolling direction. A tensile test was conducted at a strain rate of 6.7 x 10⁻³ s⁻¹. The measured values, yield ratios YR, and values of TS x EL are also shown in Table 2.

Table 2 indicates that steel sheet Nos. 1, 2, 5 to 8, 11 to 16, 18, 21, 22, 24, and 28 of the present invention satisfying the composition and production conditions of the present invention show yield ratios of as low as 55% or less and satisfactory values of tensile strength TS and elongation EL. On the other hand, comparative steel sheet Nos. 3, 4, 9, 10, 17, 19, 20, 23, 25 to 27, and 29 to 38 not satisfying the composition and production conditions of the present invention are out of the preferred range of at least one of yield ratio YR, tensile strength TS, elongation EL, and balance therebetween. Table 1 indicates that among the steel sheets of the present invention, steel sheet Nos. A to L satisfying N ≤ 0.007% - (0.003 x Al)% caused no cracking in the slabs.

**Table 1**

| Steel | Chemical component (mass %) | | | | | | | | | | | | | | Si + Al (mass%) | 0.007-0.003 Al (mass%) | Cr+V+Mo | Cracking in slab | Remarks |
|---|---|---|---|---|---|---|---|---|---|---|---|---|---|---|---|---|---|---|---|
| | C | Si | Mn | P | S | Al | N | Cr | V | Mo | Ti | Nb | B,Ni | Ca, REM | | | | | |
| A | 0.12 | 0.20 | 1.8 | 0.014 | 0.0017 | 0.7 | 0.0040 | 0.3 | 0 | 0 | 0.002 | 0.001 | - | - | 0.9 | 0.0049 | 0.30 | No | This invention |
| B | 0.20 | 0.40 | 1.6 | 0.012 | 0.0010 | 0.5 | 0.0044 | 0 | 0.2 | 0 | 0.001 | 0.001 | | | 0.9 | 0.0055 | 0.20 | No | This invention |
| C | 0.17 | 0.30 | 1.8 | 0.010 | 0.0008 | 0.7 | 0.0032 | 0.3 | 0 | 0 | 0.001 | 0.001 | | | 1.0 | 0.0049 | 0.30 | No | This invention |
| D | .008 | 0.01 | 2.2 | 0.020 | 0.6007 | 1.2 | 0.0012 | 0 | 0 | 0.4 | 0.003 | 0.002 | | | 1.2 | 0.0034 | 0.40 | No | This invention |
| E | 0.16 | 1.60 | 2.0 | 0.012 | 0.0025 | 0.35 | 0.0043 | 0.2 | 0.2 | 0 | 0.004 | 0.002 | B:0.0020 | | 2.0 | U.0060 | 0.40 | No | This invention |
| F | 0.06 | 0.80 | 2.4 | 0.030 | 0.0035 | 0.7 | 0.0020 | 0.6 | 0 | 0.6 | 0.002 | 0.001 | | Ca:0.004 | 1.5 | 0.0049 | 1.20 | No | This invention |
| G | 0.23 | 1.20 | 1.7 | 0.016 | 0.0012 | 1.0 | 0.0035 | 0 | 0.3 | 0.4 | 0.001 | 0.001 | Ni:0.2 | REM:0.002 | 2.2 | 0.0040 | 0.70 | No | This invention |
| H | 0.11 | 0.01 | 1.7 | 0.028 | 0.0015 | 0.7 | 0.0033 | 0.3 | 0 | 0 | 0.001 | 0.002 | | | 0.7 | 0.0049 | 0.30 | No | This invention |
| I | 0.15 | 0.25 | 1.2 | 0.025 | 0.0023 | 0.55 | 0.0015 | 0.3 | 0.1 | 0.2 | 0.003 | 0.001 | | Ca:0.002 REM:0.003 | 0.8 | 0.0054 | 0.60 | No | This invention |
| J | 0.13 | 0.20 | 1.6 | 0.014 | 0.0008 | 1.7 | 0.0012 | 0.8 | 0 | 0 | 0.001 | 0.002 | | | 1.9 | 0.0019 | 0.80 | No | This Invention |
| K | 0.11 | 0.30 | 2.8 | 0.010 | 0.0020 | 1.5 | 0.0009 | 0.2 | 0 | 0.2 | 0.001 | 0.001 | | Ca:0.005 | 1.8 | 0.0025 | 0.40 | No | This invention |
| L | 0.16 | 0.01 | 1.4 | 0.018 | 0.0026 | 1.2 | 0.0025 | 0.2 | 0.1 | 0.1 | 0.002 | 0.003 | B:0.0020 Ni:0.2 | REM:0.002 | 1.2 | 0.0034 | 0.40 | No | This invention |
| M | 0.13 | 0.30 | 1.8 | 0.015 | 0.0022 | 1.3 | 0.0037 | 0.4 | 0 | 0 | 0.001 | 0.003 | | | 1.6 | 0.0031 | 0.40 | Present | This invention |
| N | 0.19 | 001 | 1.9 | 0.021 | 0.0014 | 1.7 | 0.0024 | 0 | 0 | 0.5 | 0.002 | 0.001 | | | 1.7 | 0.0019 | 0.50 | Present | This invention |
| O | 0.11 | 0.70 | 2.1 | 0.019 | 0.0024 | 0.8 | 0.0057 | 0.2 | 0.1 | 0 | 0.001 | 0.001 | | | 1.5 | 0.0046 | 0.30 | Present | Comparative |
| P | 0.13 | 0.50 | 1.6 | 0.027 | 0.018 | 0.4 | 0.0063 | 0 | 0.1 | 0.1 | 0.005 | 0.004 | Ni:0.1 | | 0.9 | 0.0058 | 0.20 | Present | Comparative |
| Q | 0.08 | 0.10 | 2.3 | 0.030 | 0.0025 | 1.1 | 0.0051 | 0 | 0.2 | 0 | 0.001 | 0.001 | B:0.0020 | Ca:0.003 | 1.2 | 0.0037 | 0.20 | Present | Comparative |
| R | 0.22 | 0.20 | 1.8 | 0.011 | 0.0035 | 1.6 | 0.0044 | 0 | 0 | 0.4 | 0.002 | 0.001 | | REM:0.001 | 1.8 | 0.0022 | 0.40 | Present | This invention |
| S | 0.14 | 1.50 | 1.9 | 0.018 | 0.0023 | 0.2 | 0.0023 | 0.2 | 0 | 0 | 0.001 | 0.001 | | | 1.7 | 0.0064 | 0.20 | No | Comparative |
| T | 0.14 | 0.70 | 1.5 | 0.020 | 0.0012 | 0.7 | 0.0032 | 0 | 0 | 0 | 0.001 | 0.002 | | | 1.4 | 0.0049 | 0.00 | No | Comparative |
| U | 0.17 | 0.30 | 1.8 | 0.011 | 0.0013 | 0.1 | 0.0020 | 0.4 | 0 | 0.2 | 0.002 | 0.001 | B:0.0010 | | 0.4 | 0.0067 | 0.60 | No | Comparative |
| V | 0.12 | 0.20 | 1.8 | 0.023 | 0.0015 | 1.5 | 0.0040 | 0 | 0 | 0.05 | 0.002 | 0.002 | | | 1.7 | 0.0025 | 0.05 | Present | Comparative |
| W | 0.16 | 0.10 | 1.9 | 0.020 | 0.0025 | 1.1 | 0.0030 | 0.2 | 0 | 0 | 0.030 | 0.001 | | | 1.2 | 0.0037 | 0.20 | No | Comparative |
| X | 0.12 | 0.30 | 1.4 | 0.032 | 0.0030 | 0.9 | 0.0025 | 0 | 0.1 | 0.1 | 0.002 | 0.020 | | | 1.2 | 0.0043 | 0.20 | No | Comparative |
| Y | 0.20 | 0.50 | 1.8 | 0.015 | 0.0022 | 0.4 | 0.0031 | 0.3 | 0.1 | 0 | 0.030 | 0.020 | | | 0.9 | 0.0058 | 0.40 | No | Comparative |
| Z | 0.040 | 0.10 | 1.5 | 0.014 | 0.0040 | 0.9 | 0.0020 | 0.2 | 0 | 0 | 0.002 | 0.001 | | Ca:0.002 | 1.0 | 0.0043 | 0.20 | No | Comparative |
| AA | 0.10 | 0.30 | 1.5 0.80 | 0.010 | 0.0020 | 0.5 | 0.0062 | 0.1 | 0 | 0.1 | 0.001 | 0.002 | | | 0.8 | 0.0055 | 0.20 | Present | Comparative |
| AB | 0.18 | 0.50 | 3.50 | 0.011 | 0.0023 | 0.6 | 0.0043 | 0.5 | 0 | 0 | 0.002 | 0.002 | | | 1.1 | 0.0052 | 0.50 | No | Comparative |

| | | | | | | | | | | | | | | | | | | | |
|---|---|---|---|---|---|---|---|---|---|---|---|---|---|---|---|---|---|---|---|
| * Underline: out of the range of the present invention | | | | | | | | | | | | | | | | | | | |

**Table 2**

| No. | Steel type | Production condition | | | | | Structure | Mechanical pro perties | | | | | Remarks |
|---|---|---|---|---|---|---|---|---|---|---|---|---|---|
| | | Annealing temp. (°C) | Cooling rate (°C/s) | Retention temp. (°C) | Retention time (s) | Alloying temp. (°C) | Residual γ (vol%) | YS (MPa) | TS (MPa) | YR (%) | EI (%) | TS×EI (MPa%) | |
| 1 | A | 830 | 10 | 425 | 95 | 520 | 8.5 | 375 | 726 | 52 | 27.2 | 119749 | This invention |
| 2 | A | 820 | 12 | 430 | 170 | 540 | 9.7 | 383 | 718 | 53 | 27.1 | 19458 | This invention |
| 3 | A | 820 | 8 | 400 | 270 | 530 | 11.0 | 438 | 659 | 66 | 29.5 | 19441 | Comparative |
| 4 | A | 840 | 10 | 440 | 100 | 630 | 2.8 | 481 | 717 | 67 | 26.4 | 18929 | Comparative |
| 5 | B | 820 | 11 | 450 | 100 | 520 | 10.3 | 422 | 791 | 53 | 25.2 | 19922 | This invention |
| 6 | C | 810 | 10 | 420 | 95 | 520 | 7.7 | 404 | 815 | 50 | 27.8 | 22657 | This invention |
| 7 | D | 820 | 10 | 470 | 70 | 530 | 9.8 | 453 | 902 | 50 | 23.1 | 20836 | This invention |
| 8 | E | 820 | 8 | 410 | 230 | 520 | 14.2 | 719 | 1346 | 53 | 18.6 | 25036 | This invention |
| 9 | E | 830 | 2 | 420 | 200 | 510 | 2.3 | 635 | 927 | 69 | 15.1 | 13998 | Comparative |
| 10 | E | 810 | 9 | 410 | 20 | 520 | 1.2 | 704 | 1333 | 53 | 9.7 | 12930 | Comparative |
| 11 | F | 810 | 8 | 425 | 95 | 530 | 10.3 | 652 | 1399 | 47 | 16.2 | 22657 | This invention |
| 12 | G | 840 | 10 | 390 | 100 | 520 | 15.7 | 721 ' | 1474 | 49 | 17.5 | 25792 | This invention |
| 13 | G | 820 | 10 | 440 | 50 | 520 | 11.4 | 719 | 1472 | 49 | 15.8 | 23258 | This invention |
| 14 | H | 810 | 18 | 470 | 95 | 530 | 8.3 | 302 | 611 | 49 | 34.0 | 20774 | This invention |
| 15 | I | 800 | 6 | 410 | 80 | 520 | 7.2 | 373 | 731 | 51 | 26.9 | 19662 | This invention |
| 16 | J | 820 | 10 | 425 | 110 | 550 | 13.3 | 420 | 950 | 44 | 25.0 | 23758 | This invention |
| 17 | J | 710 | 8 | 460 | 100 | 520 | 1.3 | 522 | 702 | 74 | 18.6 | 13057 | Comparative |
| 18 | K | 820 | 10 | 470 | 130 | 520 | 11.9 | 571 | 1189 | 48 | 19.7 | 23426 | This invention |
| 19 | K | 800 | 9 | 630 | 160 | 550 | 0.7 | 438 | 869 | 50 | 20.3 | 17641 | Comparative |
| 20 | K | 830 | 10 | 290 | 110 | 530 | 1.5 | 597 | 940 | 64 | 16.1 | 15134 | Comparative |
| 21 | L | 820 | 10 | 460 | 80 | 540 | 8.4 | 460 | 923 | 50 | 22.6 | 20870 | This invention |
| 22 | M | 820 | 10 | 450 | 140 | 520 | 10.5 | 421 | 863 | 49 | 26.2 | 22600 | This invention |
| 23 | M | 830 | 250 | 410 | 100 | 540 | 7.2 | 496 | 921 | 54 | 19.3 | 17775 | Comparative |
| 24 | N | 810 | 7 | 425 | 80 | 520 | 12.3 | 492 | 1040 | 47 | 21.9 | 22775 | This invention |
| 25 | O | 830 | 10 | 480 | 100 | 510 | 9.9 | 495 | 964 | 51 | 19.2 | 18509 | Comparative |
| 26 | P | 820 | 10 | 425 | 120 | 530 | 6.9 | 535 | 787 | 68 | 25.4 | 19979 | Comparative |
| 27 | Q | 820 | 10 | 425 | 120 | 520 | 7.5 | 480 | 941 | 51 | 20.2 | 19008 | Comparative |
| 28 | R | 820 | 10 | 425 | 70 | 520 | 12.2 | 499 | 1036 | 48 | 22.5 | 23314 | This invention |
| 29 | S | 830 | 10 | 460 | 110 | 520 | 11.3 | 553 | 1043 | 53 | 23.0 | 23994 | Comparative |
| 30 | T | 800 | 8 | 420 | 160 | 510 | 10.1 | 415 | 693 | 60 | 31.9 | 22122 | Comparative |
| 31 | u | 850 | 8 | 425 | 95 | 530 | 0.9 | 504 | 933 | 54 | 1.96 | 18287 | Comparative |
| 32 | V | 820 | 8 | 460 | 200 | 520 | 11.5 | 382 | 675 | 57 | 34.0 | 22944 | Comparative |
| 33 | W | 820 | 10 | 460 | 170 | 520 | 9.6 | 590 | 831 | 71 | 25.1 | 20858 | Comparative |
| 34 | X | 820 | 10 | 400 | 100 | 520 | 10_{.}8 | 480 | 685 | 70 | 30.7 | 21019 | Comparative |
| 35 | Y | 820 | 7 | 425 | 150 | 540 | 8.5 | 742 | 939 | 79 | 21.3 | 19998 | Comparative |
| 36 | **Z** | 820 | 10 | 425 | 150 | 520 | 2.1 | 217 | 420 | 52 | 38.9 | 16338 | Comparative |
| 37 | AA | 820 | 10 | 450 | 70 | 520 | 1.4 | 209 | 391 | 53 | 42.3 | 16539 | Comparative |
| 38 | AB | 820 | 10 | 430 | 100 | 520 | 12.4 | 736 | 1446 | 51 | 11.3 | 16343 | Comparative |

| | | | | | | | | | | | | | |
|---|---|---|---|---|---|---|---|---|---|---|---|---|---|
| * Underline: out of the range of the present invention | | | | | | | | | | | | | |

## Claims

1. A method for producing a galvannealed steel sheet, wherein steel containing, by % by mass, 0.05 to 0.25% of C, 2% or less of Si, 1 to 3% of Mn, 0.1% or less of P, 0.01% or less of S, 0.3 to 2% of Al, less than 0.005% of N, 1% or less of Cr, 1% or less of V, 1% or less of Mo, less than 0.005% of Ti, and less than 0.005% of Nb and optionally at least one of 0.005% or less of B and 1% or less of Ni, and at least one of Ca and REM in a total amount of 0.01% or less, and satisfying the relations, Si + Al ≥ 0.6%, N ≤ 0.007% - (0.003 x Al) %, and Cr + V + Mo = 0.1 to 2%, the balance being Fe and inevitable impurities, is melted and continuously cast to form a cast slab,
the slab is then hot-rolled and cold-rolled,
and, in a continuous hot-dip plating line, the resulting steel sheet is then annealed in a temperature range of 730°C to 900°C, cooled at a cooling rate of 3 to 100°C/second, retained in a temperature range of 350°C to 600°C for more than 90 to 250 seconds, hot-dip galvanized, and then alloyed at a temperature of 470°C to 600°C.

2. A galvannealed steel sheet obtainable by the method of claim 1, wherein the steel sheet includes, by % by mass, 0.05 to 0.25% of C, 2.0% or less of Si, 1 to 3% of Mn, 0.1% or less of P, 0.01% or less of S, 0.3 to 2% of Al, less than 0.005% of N, 1% or less of Cr, 1% or less of V, 1% or less of Mo, less than 0.005% of Ti, and less than 0.005% of Nb and optionally at least one of 0.005% or less of B and 1% or less of Ni, and at least one of Ca and REM in a total amount of 0.01% or less, and satisfying the relations, Si + Al ≥ 0.6%, N ≤ 0.007% - (0.003 × Al) %, and Cr + V + Mo = 0.1 to 2%, the balance being Fe and inevitable impurities, and having a residual austenite phase at a volume ratio of 3 to 20% and a yield ratio of 55% or less.

## Patentansprüche

1. Verfahren zur Herstellung eines galvannealed (nach dem Verzinken wärmebehandelten) Stahlblechs, wobei Stahl, der in Masse-% 0,05 bis 0,25 % C, 2 % oder weniger Si, 1 bis 3 % Mn, 0,1 % oder weniger P, 0,01 % oder weniger S, 0,3 bis 2 % Al, weniger als 0,005 % N, 1 % oder weniger Cr, 1 % oder weniger V, 1 % oder weniger Mo, weniger als 0,005 % Ti und weniger als 0,005 % Nb und gegebenenfalls mindestens eines von 0,005 % oder weniger B und 1 % oder weniger Ni und mindestens eines von Ca und SEM in einer Gesamtmenge von 0,01 % oder weniger enthält und die Bedingungen Si + Al ≥ 0,6 %, N ≤ 0,007 % - (0,003 × Al) %, und Cr + V + Mo = 0,1 bis 2 % erfüllt, wobei der Rest Fe und unvermeidliche Verunreinigungen sind, geschmolzen und kontinuierlich gegossen wird, um eine gegossene Bramme zu bilden,
die Bramme dann warmgewalzt und kaltgewalzt wird,
und das resultierende Stahlblech dann in einer kontinuierlichen Schmelztauch-Plattieranlage in einem Temperaturbereich von 730 bis 900°C geglüht, mit einer Abkühlgeschwindigkeit von 3 bis 100°C/Sekunde abgekühlt, in einem Temperaturbereich von 350 bis 600°C für mehr als 90 bis 250 Sekunden gehalten, feuerverzinkt und dann bei einer Temperatur von 470 bis 600°C legiert wird.

2. Galvannealed (nach dem Verzinken wärmebehandeltes) Stahlblech, erhältlich nach dem Verfahren gemäss Anspruch 1, wobei das Stahlblech in Masse-% 0,05 bis 0,25 % C, 2,0 % oder weniger Si, 1 bis 3 % Mn, 0,1 % oder weniger P, 0,01 % oder weniger S, 0,3 bis 2 % Al, weniger als 0,005 % N, 1 % oder weniger Cr, 1 % oder weniger V, 1 % oder weniger Mo, weniger als 0,005 % Ti und weniger als 0,005 % Nb und gegebenenfalls mindestens eines von 0,005 % oder weniger B und 1 % oder weniger Ni und mindestens eines von Ca und SEM in einer Gesamtmenge von 0,01 % oder weniger einschliesst und die Bedingungen Si + Al ≥ 0,6 %, N ≤ 0,007 % - (0,003 x Al) %, und Cr + V + Mo = 0,1 bis 2 % erfüllt, wobei der Rest Fe und unvermeidliche Verunreinigungen sind, und eine Rest-Austenitphase in einem Volumenverhältnis von 3 bis 20 % und ein Streckgrenzenverhältnis von 55 % oder weniger aufweist.

## Revendications

1. Procédé de production d'une tôle d'acier recuite par galvanisation, dans lequel l'acier contenant, en % en masse, 0,05 à 0,25% de C, 2% ou moins de Si, 1 à 3% de Mn, 0,1% ou moins de P, 0,01% ou moins de S, 0,3 à 2% de Al, moins de 0,005% de N, 1% ou moins de Cr, 1% ou moins de V, 1% ou moins de Mo, moins de 0,005% de Ti, et moins de 0,005% de Nb et éventuellement au moins l'un de 0,005% ou moins de B et de 1% ou moins de Ni, et au moins l'un de Ca et de REM en une quantité totale de 0,01% ou moins, et satisfaisant les relations, Si + Al = 0,6%,
N = 0, 007% - (0,003 x Al) %, et Cr + V + Mo = 0,1 à 2%, le reste étant du Fe et des impuretés inévitables, est fondu et coulé en continu pour former une brame coulée,
la brame est ensuite laminée à chaud et laminée à froid,
et, dans une ligne de métallisation par immersion à chaud en continu, la tôle d'acier résultante est ensuite recuite dans une plage de température de 730°C à 900°C, refroidie à une vitesse de refroidissement allant de 3 à 100 °C/seconde, maintenue à une plage de température allant de 350 °C à 600°C pendant plus de 90 à 250 secondes, galvanisée à chaud, et ensuite alliée à une température allant de 470°C à 600°C.

2. Tôle d'acier recuite par galvanisation pouvant être obtenue par le procédé selon la revendication 1, dans lequel la tôle d'acier comporte, en% en masse, 0,05 à 0,25% de C, 2,0% ou moins de Si, 1 à 3% de Mn, 0,1% ou moins de P , 0,01% ou moins de S, 0,3 à 2% de Al, moins de 0,005% de N, 1% ou moins de Cr, 1% ou moins de V, 1% ou moins de Mo, moins de 0,005% de Ti, et moins de 0,005% de Nb et éventuellement au moins l'un de 0,005% ou moins de B et de 1% ou moins de Ni, et au moins l'un de Ca et de REM en une quantité totale de 0,01% ou moins, et satisfaisant les relations, Si + Al = 0,6%, N = 0,007% - (0,003 x Al)%, et Cr + V + Mo = 0,1 à 2%, le reste étant du Fe et des impuretés inévitables, et ayant une phase d'austénite résiduelle à un rapport de volume allant de 3 à 20% et un rapport d'élasticité de 55% ou moins.
